# EUROPEAN PATENT SPECIFICATION

(11) **EP 0 959 641 B1**
(45) Date of publication and mention of the grant of the patent: **09.04.2008**
(21) Application number: 98401211.2
(22) Date of filing: 19.05.1998
(51) Int. Cl.: H04Q 11/04

(54) **Method for protection of ATM connections in a telecommunication network**
Verfahren zur Sicherung von ATM-Verbindungen in einem Telekommunikationsnetz
Procédé pour la protection de connexions "ATM" dans un réseau de télécommunication

(43) Date of publication of application: 24.11.1999
(73) Proprietor: Alcatel Lucent, 75008 Paris (FR)
(72) Inventor: Vinkel, Paul, 78140 Velizy (FR); Paye,Jean - Claude, 91170 Gif Sur Yvette (FR)
(74) Representative: Sciaux, Edmond

(56) References cited:
- SAITO H ET AL: "AN IMPROVED GUIDED RESTORATION ALGORITHM FOR ATM CROSSCONNECT NETWORKD" 1996 IEEE NETWORK OPERATIONS AND MANAGEMENT SYMPOSIUM (NOMS), KYOTO, APR. 15 - 19, 1996, vol. 1, no. SYMP. 5, 15 April 1996, pages 225-234, XP000641094 INSTITUTE OF ELECTRICAL AND ELECTRONICS ENGINEERS
- JONES C K ET AL: "A FAST ATM REROUTING ALGORTHM FOR NETWORKS WITH UNRELIABLE LINKS" SERVING HUMANITY THROUGH COMMUNICATIONS. SUPERCOMM/ICC, NEW ORLEANS, MAY 1 - 5, 1994, vol. 1, 1 May 1994, pages 91-95, XP000438889 INSTITUTE OF ELECTRICAL AND ELECTRONICS ENGINEERS
- AKIHIKO TAKASE ET AL: "ATM TRANSPORT NODE FOR FLEXIBLE AND ROBUST ACCESS NETWORKS" PROCEEDINGS OF THE GLOBAL TELECOMMUNICATIONS CONFERENCE (GLOBECOM), HOUSTON, NOV. 29 - DEC. 2, 1993, vol. 3, 29 November 1993, pages 1481-1487, XP000431317 INSTITUTE OF ELECTRICAL AND ELECTRONICS ENGINEERS
- HIDEO TATSUNO ET AL: "HITLESS PATH PROTECTION SWITCHING TECHNIQUES FOR ATM NETWORKS" ELECTRONICS & COMMUNICATIONS IN JAPAN, PART I - COMMUNICATIONS, vol. 77, no. 8, 1 August 1994, pages 13-23, XP000485780

## Description

The invention concerns the protection of ATM connections, when the network comprises at least one protection domain which covers only a portion of a connection. Each protection domain comprises a first and a second access node. Each of these access nodes can switch over from a first to a second connection, in case of failure on the first connection. For the direction of transmission going from the first access node to the second access node, the first access node is called source node, and the second access node is called sink node.

Until now there is a protection method which is only applicable when the protection domain covers a complete connection from end to end like for example the one described in document "An improved guided restoration algorithm for ATM crossconnect networks" from Saito H. et al. It is based on the AIS function (Alarm Indicator Signal) : AIS cells are sent downstream for informing downstream nodes about transmission failure. It uses a protocol called APS (Automatic Protection Switching). When a sink node receives an AIS cell, it sends a switchover request message to the source node with help of an APS cell. Then the source node and the sink nodes switch over.

When a protection domain covers only a portion of a connection, this method is not applicable because the sink node cannot distinguish whether the AIS cell originates from a node located before or after the source node.

The aim of the invention is to propose a method applicable when the network comprises at least one protection domain covering only a portion of a connection, without changing anything in the present definition of the AIS function, for simplicity and backward compatibility with the present state of the Art. According to the invention, the ATM connection protection is a separate problem from the OAM (Operation And Maintenance), and therefore it must be solved in a separate way. Since APS cells have been created specifically for this problem, the proposed method is based on the usage of such APS cells, and the AIS cells are used for triggering the APS mechanism.

According to the invention, a method for protection of ATM connections in a telecommunication network comprising at least one protection domain which covers only a portion of a connection, each protection domain comprising a source node and a peer sink node, each source node and its peer sink node being able to be connected by at least two alternative connection portions and being able to switch over from one connection portion to the other; any node of the network being able to send an alarm message downstream a current way and each node being able to memorise a failure connection status when it receives such an alarm message ;
characterised in that it comprises the following steps :
- in each sink node which receives the alarm message, sending a switchover request message to its peer source node to request a switchover which is executed only if the peer source node has not memorised an alarm message ;
- and then, in said sink node, switching over only if the peer source node has responded positively.

Preferably, it further consists in sending, from a sink node to a peer source node a confirm message to confirm that this sink node is switching over, and in switching over in the source node only if the source node receives the confirm message.

The **figure 1** shows an example of an ATM telecommunication network with nested protection domains.

The **figure 2** illustrates the claimed method by showing the transmission of messages in this example of ATM network when a transmission failure occurs.

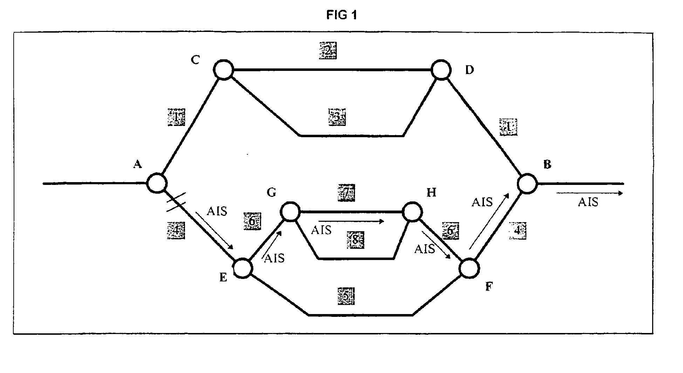

In the example of **figure 1**, a connection is established between nodes A and B. Nodes A to H are able to perform switchover between elementary connection portions numbered from 1 to 8. There are protection domains which covers only a portion of the connection, and which are nested into other protection domains :
- Nodes C and D may be connected either by connection 2 or by connection 3 ;
- Nodes G and H may be connected either by connection 7 or by connection 8 ;
- Nodes E and F may be connected either by connection 6 (via G and H) or by connection 5 ;
- Nodes A and B may be connected either by connection 1 (via C and D) or by connection 4 (via E and F).

For instance, there is a failure on elementary connection portion 4 between A and E. Then, AIS cells are periodically generated either directly by E or by the first node on the elementary connection portion 4 (not shown on the figure). These AIS cells are received by all the nodes E, G, H, F and B, assumed that the active way is currently A-4-E-6-G-7-H-6-F-4-B. All these nodes memorise that the corresponding entering connection is in the AIS state, by memorising a connection failure status indicator. All these nodes retransmit the AIS cells downstream.

The nodes H, F and B are sink points of protection domains. Each of these sink nodes sends an APS message to its peer source node, upstream, respectively G, E and A, each sink node knowing the identity of its peer source node. Each APS message contains :
- SWRQ : request for switchover,
- #G, #E or #A : address of the destination node.

The nodes G, E and A answer either by accepting or refusing this switchover request :
- acceptance if the status of the connection entering this node indicates no failure, case of node A.
- refusal if the status of the connection entering this node indicates a failure, case of nodes G and E.

The source node may switch over as soon as it answers positively. Optionally, the source node may wait for a Confirm message, CF, sent from the sink node to the source node to indicate that the the sink node switches over and to trigger the switchover of the source node, for improving reliability of the method.

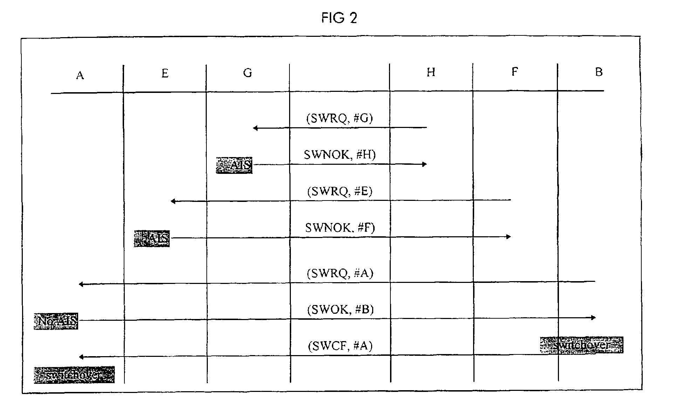

The **figure 2** illustrates the claimed method by showing the transmission of APS messages in this example of network when a transmission failure occurs. The node H sends a switchover request message (SWRQ, #G) to peer node G. This latter answers negatively (SWNOK, #H) and does not swich over, because it is in AIS state. This means that the failure occurred upstream. Then the node F sends a switchover request message (SWRQ, #E) to peer node E. This latter answers negatively (SWNOK, #F) and does not swich over, because it is in AIS state. This means that the failure occurred upstream. Then the node B sends a switchover request message (SWRQ, #A) to node A. This node A answers positively (SWOK, #B), because it is **not** in AIS state. Then the node B switches over and then sends a confirm message (SWCF, #A) to node A. Then this latter switches over.

One remarks that each sink node operates independently. They may operate quasi simultaneously. Only the nodes A and B perform a switchover.

The APS protocol must use the standby ATM route in order to check it before to perform switchover.

This solution has only advantages :
- It separates the problems of OAM and network protection, especially it needs no correlation between the concept of connection segment used for OAM purpose, and the concept of protection domains used for protection purpose, and therefore doesn't need the notion of embedded connection segments.
- Whatever the solution chosen for the AIS cells, modification of their definition or not, it is necessary to add a procedure based on APS cells in order to synchronise the switchover. So, basing the network protection on APS cells brings no additional complexity.
- This solution is backward compatible, since it needs no evolution of the present AIS cells and intermediate nodes.

## Claims

1. Method for protection of ATM connections in a telecommunication network comprising at least one protection domain which covers only a portion of a connection, each protection domain comprising a source node (A) and a peer sink node (B), each source node and its peer sink node being able to be connected by at least two alternative connection portions (1, 4) and being able to switch over from one connection portion to the other ; any node of the network being able to send an alarm message (AIS) downstream a current way (AEG7HFB) and each node being able to memorise a failure connection status when it receives such an alarm message (AIS) ;
**characterised in that** it comprises the following steps :
- in each sink node (H, F, B) which receives the alarm message (AIS), sending a switchover request message (SWRQ) to its peer source node (respectively G, E, A) to request a switchover which is executed only if the peer source node has not memorised an alarm message ;
- and then, in said sink node, switching over only if the peer source node has responded positively.

2. Method according to claim 1, **characterised in that** it further consists in sending, from a sink node (B) to a peer source node (A) a confirm message (SWCF,#A) to confirm that this sink node (B) is switching over, and in switching over in the source node only if the source node receives the confirm message.

## Patentansprüche

1. Verfahren zum Schützen von ATM-Verbindungen in einem Telekommunikationsnetzwerk, das mindestens eine Schutz-Domain umfasst, die nur einen Teil einer Verbindung umfasst, wobei jede Schutz-Domain einen Ursprungsknoten (A) und einen Peer-Aufnahmeknoten (B) umfasst, und wobei jeder Ursprungsknoten und sein Peer-Aufnahmeknoten über mindestens zwei alternative Verbindungsbereiche (1,4) verbunden werden können und eine Übergabe von einem Verbindungsbereich zu einem anderen durchführen können; wobei ein beliebiger Knoten des Netzwerks eine Alarmmeldung (AIS) in Abwärtsrichtung entlang eines aktuellen Pfads (AEG7HFB) senden kann und wobei jeder Knoten Informationen über einen Verbindungsausfallstatus speichern kann, wenn er eine solche Alarmmeldung (AIS) empfängt;
**dadurch gekennzeichnet, dass** das Verfahren die folgenden Schritte umfasst:
- In jedem Aufnahmeknoten (H,F,B), der eine Alarmmeldung (AIS) empfängt, Senden einer Übergabe-Anforderungsmeldung (SWRQ) an seinen Peer-Ursprungsknoten (G, E, A) zum Anfordern einer Übergabe, die nur durchgeführt wird, wenn der Peer-Ursprungsknoten keine Alarmmeldung gespeichert hat;
- anschließend in diesem Aufnahmeknoten nur dann eine Durchführung einer Übergabe, wenn der Peer-Ursprungsknoten positiv geantwortet hat.

2. Verfahren gemäß Anspruch 1, **dadurch gekennzeichnet, dass** es des Weiteren das Senden einer Bestätigungsmeldung (SWCF,#A) von einem Aufnahmeknoten (B) an einen Peer-Ursprungsknoten (A) umfasst zur Bestätigung, dass dieser Aufnahmeknoten (B) eine Übergabe durchführt, sowie nur dann eine Durchführung der Übergabe im Ursprungsknoten, wenn der Ursprungsknoten die Bestätigungsmeldung empfängt.

## Revendications

1. Procédé de protection des connexions ATM dans un réseau de télécommunication comprenant au moins un domaine de protection qui couvre seulement une portion d'une connexion, chaque domaine de protection comprenant un noeud source (A) et un noeud collecteur homologue (B), chaque noeud source et son noeud collecteur homologue étant capables d'être connectés par le biais d'au moins deux portions de connexion alternatives (1, 4) et étant capables de permuter d'une portion de connexion sur l'autre ; tout noeud du réseau étant capable d'envoyer un message d'alarme (AIS) en aval d'un trajet courant (AEG7HFB) et chaque noeud étant capable de mémoriser un état de défaillance de la connexion lorsqu'il reçoit un tel message d'alarme (AIS) ;
**caractérisé en ce qu'**il comprend les étapes suivantes :
- dans chaque noeud collecteur (H, F, B) qui reçoit le message d'alarme (AIS), envoi d'un message de demande de permutation (SWRQ) à son noeud source homologue (respectivement G, E, A) pour demander une permutation, laquelle est seulement exécutée si le noeud source homologue n'a pas mémorisé un message d'alarme ;
- et ensuite, dans ledit noeud collecteur, permutation seulement si le noeud source homologue a répondu positivement.

2. Procédé selon la revendication 1, **caractérisé en ce qu'**il consiste en plus à émettre, depuis un noeud collecteur (B) vers un noeud source homologue (A), un message de confirmation (SWCF, #A) pour confirmer que ce noeud collecteur (B) est en train de permuter et à n'effectuer la permutation dans le noeud source que si le noeud source reçoit le message de confirmation.
